# FASCICULE DE BREVET EUROPEEN

(11) **EP 3 977 212 B1**
(45) Date de publication et mention de la délivrance du brevet: **28.06.2023**
(21) Numéro de dépôt: 20721657.3
(22) Date de dépôt: 04.05.2020
(51) Int. Cl.: G05B 11/01, G05B 13/02

(54) **SYSTEME ET METHODE DE REGULATION D'UN PARAMETRE PHYSIQUE D'UN SYSTEME REEL D'UNE TURBOMACHINE A PARTIR D'UN PARAMETRE PHYSIQUE DE CONSIGNE**
SYSTEM UND VERFAHREN ZUR REGELUNG EINES PHYSIKALISCHEN PARAMETERS EINES REALEN TURBOMASCHINENSYSTEMS AUS EINEM PHYSIKALISCHEN SOLLWERTPARAMETER
SYSTEM AND METHOD FOR REGULATING A PHYSICAL PARAMETER OF A REAL TURBOMACHINE SYSTEM FROM A PHYSICAL SETPOINT PARAMETER

(30) Priorité: 29.05.2019 FR 1905707
(43) Date de publication de la demande: 06.04.2022
(73) Titulaire: SAFRAN AIRCRAFT ENGINES, 75015 Paris (FR)
(72) Inventeur: DJELASSI, Cedrik, 77550 MOISSY-CRAMAYEL (FR)
(74) Mandataire: Argyma
(86) Numéro de dépôt international: PCT/EP2020/062302
(87) Numéro de publication internationale: WO 2020/239366

(56) Documents cités:
- FR-A1- 3 040 220
- JP-A- H09 106 303
- JP-A- S62 187 903

## Description

### DOMAINE TECHNIQUE DE L'INVENTION

La présente invention concerne un système de régulation d'un paramètre physique d'un système réel d'une turbomachine à partir d'un paramètre physique de consigne. Par exemple, le paramètre physique peut correspondre à une vitesse de déplacement d'un clapet d'un turboréacteur, un débit de carburant, un angle d'orientation d'une aube, etc.

De manière connue, un système de régulation REG comporte un correcteur comportant une fonction de correction C1(p) et un gain de paramétrage K. La performance du système de régulation est évaluée notamment en fonction de son temps de réponse et de sa stabilité. En pratique, un système de régulation est paramétré pour assurer un compromis entre temps de réponse et stabilité.

En pratique, un système réel d'une turbomachine comporte des caractéristiques et des variables qui sont susceptibles d'évoluer et de se dégrader au cours du temps (usure, dérive, etc.). Aussi, un système de régulation dont le fonctionnement est optimal lors de sa mise en service peut être non-optimal quelques mois plus tard, en particulier, sur le plan de la stabilité. Pour éliminer ce potentiel inconvénient, lors de la mise en service, le système de régulation est paramétré de manière à posséder une marge de stabilité importante, ce qui affecte le temps de réponse.

La présente invention vise à éliminer au moins certains de ces inconvénients en proposant un système de régulation permettant de s'adapter de manière dynamique afin de posséder des bonnes performances de stabilité et de temps de réponse au cours du temps.

De manière incidente, on connaît dans l'art antérieur par la demande de brevet US2004/0123600 un système de régulation enseignant d'optimiser la définition du système réel au cours du temps afin d'intégrer les défauts et dysfonctionnements apparaissant au cours du temps. L'optimisation d'un tel système réel est complexe (définition de nouvelles fonctions de transfert, etc.) et ne permet pas une régulation réactive. Le coût calculatoire est très important.

On connait également par le brevet US5537310 un modèle de correction adaptatif au cours duquel le gain de paramétrage d'un modèle du système réel est adapté lors d'une phase de transitoire. Ce document ne traite que de stabilité pour les transitoires et ne permet pas de traiter les défauts de rapidité.

Le document FR 3 040 220 A1 divulgue un système de régulation d'un paramètre régulé.

### PRESENTATION DE L'INVENTION

L'invention concerne un système de régulation d'un paramètre physique d'un système réel d'une turbomachine à partir d'un paramètre physique de consigne, le système de régulation présentant un temps de réponse et comportant :
- un correcteur comportant une fonction de correction et un gain de paramétrage K,
- une fonction de transfert inverse théorique du système réel, et
- un système d'optimisation du gain de paramétrage K au cours de la régulation, le système d'optimisation comprenant :
- un module de correction de stabilité configuré pour déterminer une première constante de gain K1, de valeur positive, lors d'une détection d'une instabilité du système de régulation lors de la régulation du paramètre physique,
- un module de correction du temps de réponse du système de régulation configuré pour déterminer une deuxième constante de gain K2, de valeur négative, lors d'une détection d'un retard lors de la régulation du paramètre physique, le module de correction de stabilité étant configuré pour inhiber le module de correction du temps de réponse lors d'une détection d'une instabilité lors de la régulation du paramètre physique, et
- un module de détermination configuré pour déterminer le gain de paramétrage K en fonction de la première composante de gain K1 et de la deuxième composante de gain K2 déterminées préalablement.

L'invention est remarquable en ce que le système de régulation permet de corriger de manière dynamique un défaut de stabilité par augmentation du gain de paramétrage et un retard par diminution de gain de paramétrage, afin que le système de régulation possède des performances optimales. Le système de régulation est ainsi autoadaptatif. Il n'est avantageusement plus nécessaire de sacrifier le temps de réponse au regard de la stabilité comme dans l'art antérieur. La régulation est ainsi plus réactive. De manière avantageuse, l'amélioration de la rapidité est inhibée en cas d'instabilité. Autrement dit, la stabilité est corrigée de manière prioritaire, le temps de réponse n'étant amélioré que lorsque le système de régulation est stable. Grâce au système de régulation selon l'invention, la régulation est particulièrement performante pour contrer des phénomènes périodiques, caractéristiques d'une turbomachine comportant des éléments tournants, qui affectent la régulation d'un paramètre physique au cours du temps.

Le système de régulation permet ainsi de se corriger en fonction de sa propre réponse.

De manière préférée, un écart est défini entre le paramètre physique et le paramètre physique de consigne. Le module de correction de stabilité comporte un module de détection de stabilité configuré pour comparer l'écart à un seuil d'écart haut et à un seuil d'écart bas. Le module de détection de stabilité est configuré pour détecter une instabilité si l'écart est successivement supérieur au seuil d'écart haut puis inférieur au seuil d'écart bas. Autrement dit, le module de détection de stabilité permet de mesurer une déviation par rapport à une plage prédéterminée. Une telle détection est rapide et robuste.

De préférence, l'écart oscillant au cours d'une instabilité, le module de détection de stabilité est configuré pour compter les oscillations suite à une détection d'une instabilité et pour déterminer un paramètre de correction de stabilité TopCS en fonction du nombre d'oscillations comptées NB-osc, la première composante de gain K1 dépendant du paramètre de correction de stabilité TopCS. Ainsi, en comptant le nombre d'oscillations, on détermine le degré d'instabilité et on peut en déduire le degré de correction approprié.

De manière préférée, le module de correction de stabilité est configuré pour mettre à zéro le nombre d'oscillations comptées NB-osc en cas de détection d'une phase de transitoire générée par une variation significative du paramètre physique de consigne.

Autrement dit, le module de détection de stabilité est dédié pour assurer la stabilité lors d'une phase stationnaire, la stabilité lors d'une phase transitoire étant assurée par des moyens dédiés. Cela améliore la correction en permettant le calcul de valeurs de correction optimales en fonction du type d'instabilité.

De manière préférée, le module de détection de stabilité est configuré pour mettre à zéro le nombre d'oscillations comptées suite à la détermination du gain de paramétrage K à partir de la première composante de gain K1. Autrement dit, une nouvelle correction est inhibée tant qu'une correction antérieure n'a pas encore produit ses effets.

Selon un aspect de l'invention, le module de correction de stabilité comporte un module de détection de dépassement supérieur configuré pour déterminer un paramètre de dépassement supérieur TopOS, la première composante de gain K1 dépendant du paramètre de dépassement supérieur TopOS. Selon l'invention, la stabilité lors d'une phase de transitoire, ici une phase de transitoire d'accélération, ce qui correspond à une augmentation du paramètre physique de consigne, est surveillée par des moyens dédiés, ce qui assure une correction optimale.

De préférence, un écart étant défini entre le paramètre physique et le paramètre physique de consigne, le module de détection de dépassement supérieur est configuré pour débuter une période de surveillance de l'écart suite à une variation significative croissante du paramètre de consigne. Le module de détection de dépassement supérieur est configuré pour comparer l'écart à au moins un seuil de dépassement supérieur et le module de détection de dépassement supérieur est configuré pour détecter un dépassement supérieur si l'écart est supérieur au seuil de dépassement supérieur au cours de la période de surveillance. Autrement dit, seuls les dépassements au cours d'une phase de transitoire préalablement vérifiée sont pris en compte. Les dépassements lors d'une phase stationnaire sont avantageusement ignorés dans le module de détection de dépassement supérieur. Un traitement séparé d'un dépassement supérieur permet avantageusement de réaliser une correction réactive permettant de supprimer tout futur dépassement dès l'apparition d'un premier dépassement. Etant donné que la fenêtre de surveillance est étroite, la correction apportée peut être plus pertinente et réactive.

De manière préférée, le module de détection de dépassement supérieur est configuré pour inhiber une détection d'un dépassement supérieur en cas de détection d'une variation décroissante du paramètre de consigne. Autrement dit, la période de surveillance est stoppée si les conditions de transitoire croissante ne sont plus respectées. Toute correction erronée est ainsi évitée.

Selon un aspect de l'invention, le module de correction de stabilité comporte un module de détection de dépassement inférieur configuré pour déterminer un paramètre de dépassement inférieur TopUS, la première composante de gain K1 dépendant du paramètre de dépassement inférieur TopUS. De manière avantageuse, les transitoires d'accélération et de décélération sont traitées de manière distincte afin de réaliser une régulation sur-mesure pour chaque type d'instabilité.

De préférence, le module de correction de stabilité comporte un module de détection de transitoire configuré pour mesurer une variation de l'écart ε par rapport à la réponse en boucle fermée yBF du paramètre physique. Autrement dit, pour détecter un transitoire, on calcule de manière préalable la réponse théorique en boucle fermée afin de former un étalon de comparaison. Un tel étalon de comparaison dynamique est avantageux pour déterminer la période de surveillance et réaliser une correction réactive.

De préférence, le module de correction du temps de réponse est configuré pour déterminer une plage de tolérance autour du paramètre physique de consigne et pour déterminer une deuxième constante de gain K2 si le paramètre physique n'appartient pas à la plage de tolérance. Ainsi, si un retard ou une avance excessive est détectée, il est réalisé une correction de manière dynamique.

L'invention vise également une méthode de régulation d'un paramètre physique par mise en oeuvre d'un système de régulation REG tel que présenté préalablement, la méthode de régulation comportant :
- une étape de surveillance de la stabilité au cours de la régulation du paramètre physique,
- une étape de détermination d'une première constante de gain K1, de valeur positive, lors d'une détection d'une instabilité lors de la régulation du paramètre physique,
- une étape de surveillance du temps de réponse du système de régulation REG au cours de la régulation du paramètre physique en cas d'absence d'instabilité,
- une étape de détermination d'une deuxième constante de gain K2, de valeur négative, lors d'une détection d'un retard lors de la régulation du paramètre physique,
- une étape de détermination du gain de paramétrage K du correcteur C(p) à partir de la première constante de gain K1 et de la deuxième constante de gain K2 de manière à garantir la stabilité de la régulation tout en optimisant le temps de réponse.

L'invention concerne également un programme d'ordinateur comprenant des instructions pour l'exécution des étapes de la méthode de régulation telle que présentée précédemment, ledit programme étant exécuté par un ordinateur.

L'invention concerne en outre une unité électronique de commande pour turbomachine comprenant une mémoire incluant des instructions d'un programme d'ordinateur tel que présenté préalablement.

L'invention concerne aussi une turbomachine comprenant une unité électronique telle que présentée précédemment.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'un système de correction d'un système réel par un modèle inverse selon l'art antérieur ;
La figure 2 est une représentation schématique d'un système de régulation selon une forme de réalisation de l'invention pour un système de correction d'un système réel par un modèle inverse ;
La figure 3 est une représentation schématique d'une forme de réalisation d'un module de correction de stabilité ;
La figure 4 est une représentation schématique d'une forme de réalisation d'un module de détection d'instabilité ;
La figure 5 est une courbe d'évolution de l'écart ε au cours du temps pour la détection d'instabilités ;
La figure 6 est une représentation schématique d'une forme de réalisation d'un module de détection de dépassement supérieur ;
La figure 7 est une courbe d'évolution du paramètre physique suite à une variation croissante du paramètre de consigne, c'est-à-dire une phase de transitoire croissante ;
La figure 8 est un ensemble de courbes représentant l'évolution, lors d'une phase de transitoire, du paramètre physique et de l'écart pour déterminer une valeur de correction de dépassement supérieur ;
La figure 9 est une représentation schématique d'une forme de réalisation d'un module de correction du temps de réponse ;
La figure 10 est une courbe d'évolution du paramètre physique y par rapport au paramètre physique de consigne yc en phase stationnaire ;
La figure 11 est un ensemble de courbes représentant l'évolution du paramètre physique suite à un retard périodique affectant le système réel pour un système de régulation selon l'art antérieur ;
La figure 12 est un ensemble de courbes représentant l'évolution du paramètre physique suite à un retard périodique affectant le système réel pour un système de régulation selon l'invention.
Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

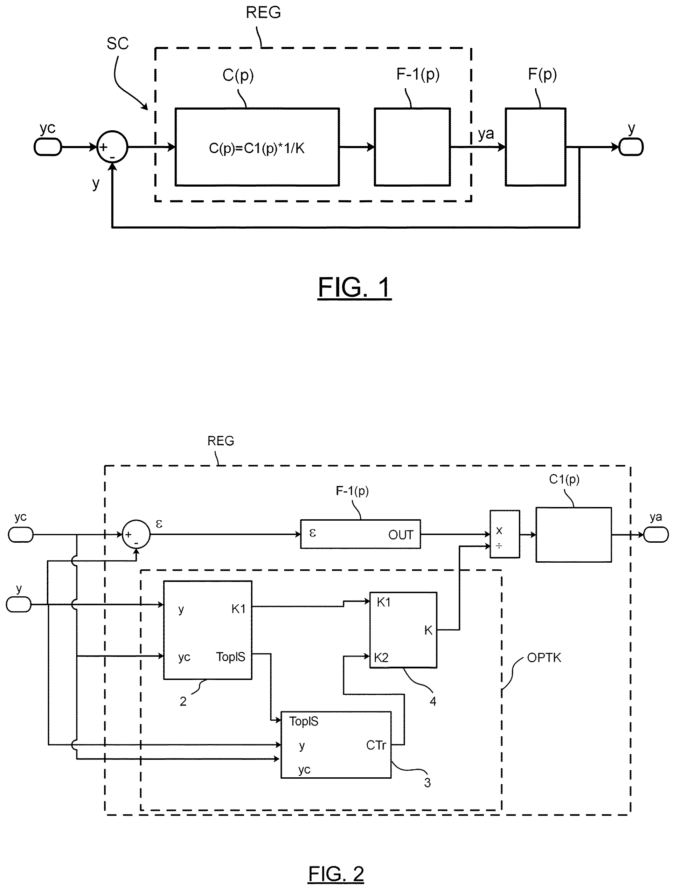

En référence à la figure 1, il est représenté un système de correction SC configuré pour déterminer un paramètre de commande y en fonction d'un paramètre de consigne yc. Dans cet exemple, le système de correction SC met en oeuvre un correcteur par modèle inverse. Autrement dit, le système de correction SC comporte successivement un correcteur C(p), un modèle inverse F⁻¹(p) et un système réel F(p). Le système réel F(p) correspond au système réel de la turbomachine qui agit sur le paramètre de commande y. En pratique, le système réel F(p) met en oeuvre plusieurs fonctions de transfert. Par nature, le système réel F(p) évolue au cours du temps (dérive, usure, etc.) et ne réagit pas de manière identique à un paramètre de consigne yc.

Dans un système de correction SC mettant en oeuvre un correcteur par modèle inverse, il est supposé que le système réel F(p) soit inversable sur le plan mathématique de manière à définir le modèle inverse F⁻¹(p). Selon cette hypothèse, le système de correction SC dépend alors essentiellement du correcteur C(p) étant donné que F⁻¹(p)*F(p)=1. Autrement dit, le temps de réponse et la stabilité du système de correction peuvent alors être directement déterminés par le correcteur C(p).

Le correcteur C(p) comporte de manière connue une fonction de transfert C₁(p) et un gain de réglage K connu de l'homme du métier sous la désignation de « gain de tuning » de manière à obtenir la formule suivante : C(p)= C₁(p)*1/K.

Selon la présente invention, le gain de réglage K est modifié au cours du temps de manière à ajuster le temps de réponse et la stabilité du correcteur C(p). Ainsi, si un retard pur apparait dans le système réel F(p) ou si le gain statistique du système réel F(p) est modifié, le gain de réglage K peut être modifié pour conserver des performances optimales.

Par la suite, l'ensemble comprenant le correcteur C(p) et le modèle inverse F⁻¹(p) est désigné régulateur REG et fournit un paramètre physique préliminaire ya au système réel F(p). En référence à la figure 2, il est représenté un régulateur REG selon une forme de réalisation de l'invention. Le régulateur REG présente un temps de réponse.

En référence à la figure 2, le correcteur C(p) comporte une fonction de transfert C₁(p) et un système d'optimisation OPTK du gain de paramétrage K.

Le système d'optimisation OPTK comporte un module de correction de stabilité 2 configuré pour déterminer une première composante de gain K1, un module de correction du temps de réponse 3 configuré pour déterminer une deuxième composante de gain K2 et un module de détermination 4 configuré pour déterminer le gain de paramétrage K en fonction des composantes de gain K1, K2 déterminées préalablement. Par la suite, on définit un écart ε qui correspond à la différence entre le paramètre physique de consigne yc et le paramètre physique y (ε=yc-y).

Les différents modules vont dorénavant être présentés de manière détaillée.

En référence à la figure 2, le module de correction de stabilité 2 est configuré pour déterminer la première composante de gain K1 ainsi qu'une instabilité TopIS en fonction du paramètre de commande y et du paramètre de consigne yc.

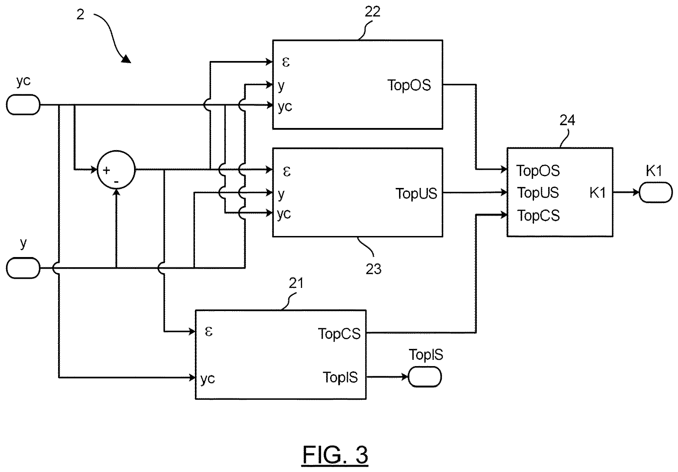

### Module de correction de stabilité 2 (Figure 3)

Le module de correction de stabilité 2 est représenté de manière schématique à la figure 3. Il comprend un module de détection d'instabilité 21 configuré pour détecter une instabilité TopIS et déterminer un paramètre de correction de stabilité TopCS à partir de l'écart ε et du paramètre de consigne yc. En pratique, comme cela sera présenté par la suite, le module de détection d'instabilité 21 permet de détecter une instabilité autour du paramètre de consigne yc.

Le module de correction de stabilité 2 comprend en outre un module de détection de dépassement supérieur 22, ou détection « d'overshoot », configuré pour détecter un dépassement supérieur TopOS à partir d'epsilon ε, du paramètre de commande y et du paramètre de consigne yc. Autrement dit, lors d'une variation croissante rapide du paramètre de consigne yc, le paramètre physique y peut dépasser le paramètre de consigne yc et créer une instabilité liée à la phase de transitoire. Dans ce qui suit, on utilisera aussi le raccourci de langage « un transitoire » pour désigner une phase de transitoire.

De manière analogue, le module de correction de stabilité 2 comprend en outre un module de détection de dépassement inférieur 23, ou détection « d'undershoot », configuré pour détecter un dépassement inférieur TopUS à partir d'epsilon ε, du paramètre de commande y et du paramètre de consigne yc.

Le module de correction de stabilité 2 comprend enfin un module de correction de stabilité 24 configuré pour déterminer la première composante de gain K1 en fonction du paramètre de détection de dépassement supérieur TopOS, du paramètre de détection de dépassement inférieur TopUS et du paramètre de correction de stabilité TopCS obtenus par les autres modules 21, 22, 23 du module de correction de stabilité 2.

### Module de détection de stabilité 21

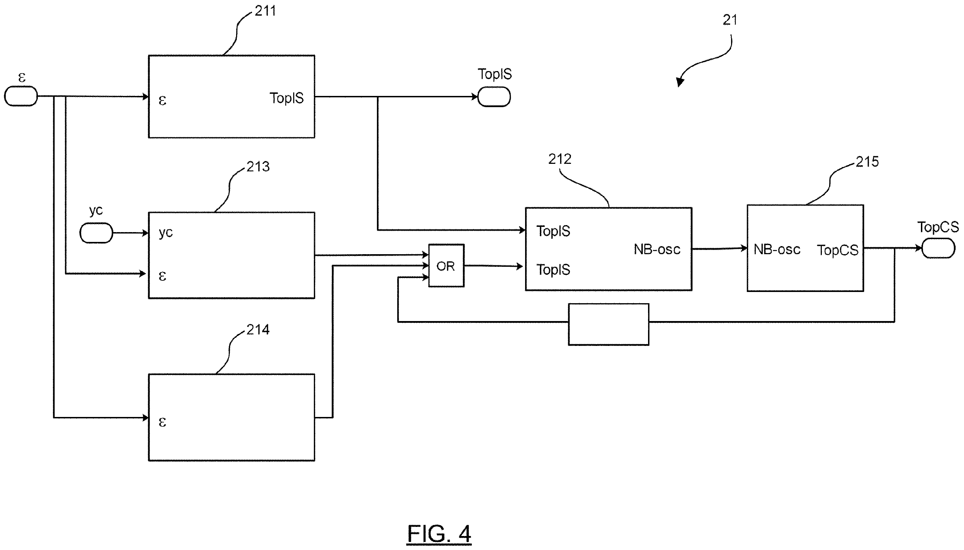

Le module de détection de stabilité 21 est représenté de manière schématique à la figure 4. Le module de détection de stabilité 21 comporte un premier module 211 pour détecter une instabilité TopIS si la valeur d'epsilon ε est supérieur à un seuil haut SH-CS ou inférieur à un seuil bas SB-CS. Une instabilité TopIS est détectée lorsqu'un seuil haut SH-CS et un seuil bas SB-CS sont successivement dépassés.

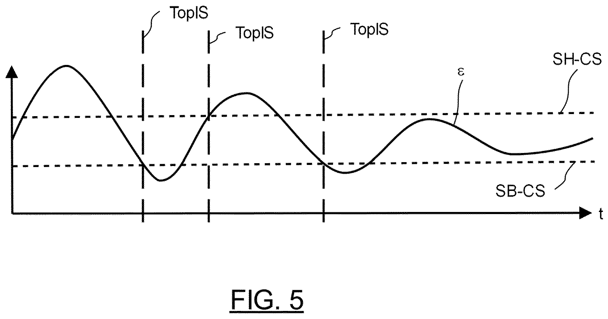

A titre d'exemple, le premier module 211 est configuré pour comparer, d'une part, l'écart ε au seuil haut SH-CS et, d'autre part, l'écart ε au seuil bas SB-CS. Si l'écart ε est supérieur au seuil haut SH-CS, le dépassement est enregistré dans une mémoire. De manière analogue, si l'écart ε est inférieur au seuil haut SB-CS, le dépassement est enregistré dans une mémoire. Lorsque deux dépassements de natures différentes sont successivement détectés, une instabilité TopIS est détectée comme illustré à la figure 5. En l'absence de franchissement des seuils SB-CS, SH-CS, aucune instabilité TopIS n'est détectée.

Comme illustré à la figure 4, le module de détection de stabilité 21 comporte en outre un deuxième module 212 pour compter les oscillations NB-osc du paramètre physique y lorsqu'une instabilité TopIS est détectée. Le nombre d'oscillations NB-osc peut être obtenu de manière pratique en comptant les dépassements successifs et en les stockant dans une mémoire lors d'une phase stationnaire.

Le deuxième module 212 est également configuré pour recevoir une commande de remis à zéro RAZ du nombre d'oscillations NB-osc. A cet effet, comme illustré à la figure 4, le module de détection de stabilité 21 comporte un troisième module 213 et un quatrième module 214 pour déterminer une remise à zéro RAZ.

Comme illustré à la figure 4, le module de détection de stabilité 21 comporte un cinquième module 215 configuré pour déterminer le paramètre de correction TopCS à partir d'un certain nombre d'oscillations NB-osc. Dans cette forme de réalisation, si le nombre d'oscillations NB-osc et supérieur à 3, une correction est réalisée et un paramètre de correction TopCS est transmis par le module de détection de stabilité 21. Comme illustré à la figure 4, lors d'une correction, une information de mise à zéro RAZ est également émise pour éviter de réitérer une même correction.

Toujours en référence à la figure 4, le module de détection de stabilité 21 comporte un troisième module 213 pour détecter un transitoire, c'est-à-dire, une variation significative du paramètre de consigne yc, et pour mettre à zéro le nombre d'oscillations NB-osc suite à une détection de transitoire. A cet effet, le troisième module 213 surveille si l'écart ε est maintenu entre un deuxième seuil haut SH2 et un deuxième seuil bas SB2. De manière préférée, le deuxième seuil haut SH2 est plus grand que le seuil haut SH-CS et le deuxième seuil bas SB2 est plus petit que le seuil bas SB-CS utilisés précédemment de manière à conserver une marge par rapport à la détection d'instabilité TopIS. Si les deuxièmes seuils SB2, SH2 sont dépassés, il est détecté la présence d'un transitoire, ce qui remet à zéro le nombre d'oscillations NB-osc et stoppe la correction de stabilité. En effet, les corrections liées aux transitoires sont traitées par le module de détection de dépassement supérieur 22 et le module de détection de dépassement inférieur 23.

Comme illustré à la figure 4, le module de détection de stabilité 21 comporte un quatrième module de temporisation 214 configuré pour détecter si une correction a été réalisée et commander une remise à zéro RAZ en cas de détection. Autrement dit, le quatrième module 4 permet d'inhiber une nouvelle correction lorsqu'une correction précédente n'a pas encore produit ses effets. Dans cet exemple, le quatrième module 214 se présente sous la forme d'une temporisation qui est fonction du temps de réponse du système réel F(p).

De manière avantageuse, le module de détection de stabilité 21 permet de déterminer un paramètre de correction TopCS en fonction du nombre d'oscillations NB-osc mesurées suite à la détection d'une instabilité TopIS. De manière avantageuse, toute correction est inhibée en cas de transitoire ou de correction non encore prise en compte par le système réel F(p). Le paramètre de correction TopCS ainsi calculé permet d'améliorer la stabilité de la régulation comme cela sera présenté par la suite.

### Module de détection de dépassement supérieur 22

Le module de détection de dépassement supérieur 22 est représenté de manière schématique à la figure 3. Il permet de déterminer une valeur de correction supérieure TopOS si le paramètre physique y à réguler réalise un dépassement supérieur en fin de transitoire. Autrement dit, le module de détection de dépassement supérieur 22 permet de réaliser une correction immédiate suite à une variation croissante du paramètre de consigne yc.

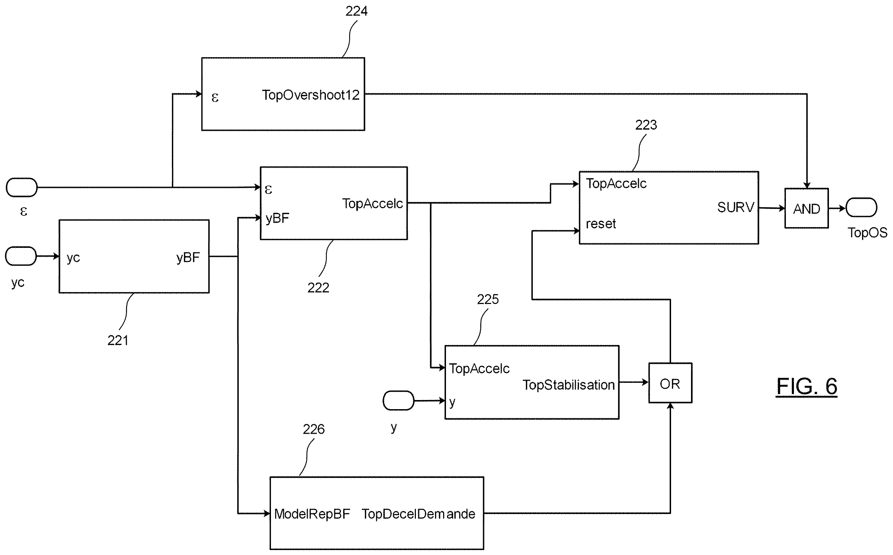

En pratique, en référence à la figure 6, le module de détection de dépassement supérieur 22 comporte un module de détermination 221 de la réponse du système réel F(p) en boucle fermée Yb suite à la réception d'un paramètre physique de consigne yc. Cela permet de déterminer une réponse idéale théorique du système réel F(p). Dans cet exemple, le module de détermination 221 met en oeuvre un filtre du type « passe-bas », en particulier, d'ordre 1 ou 2.

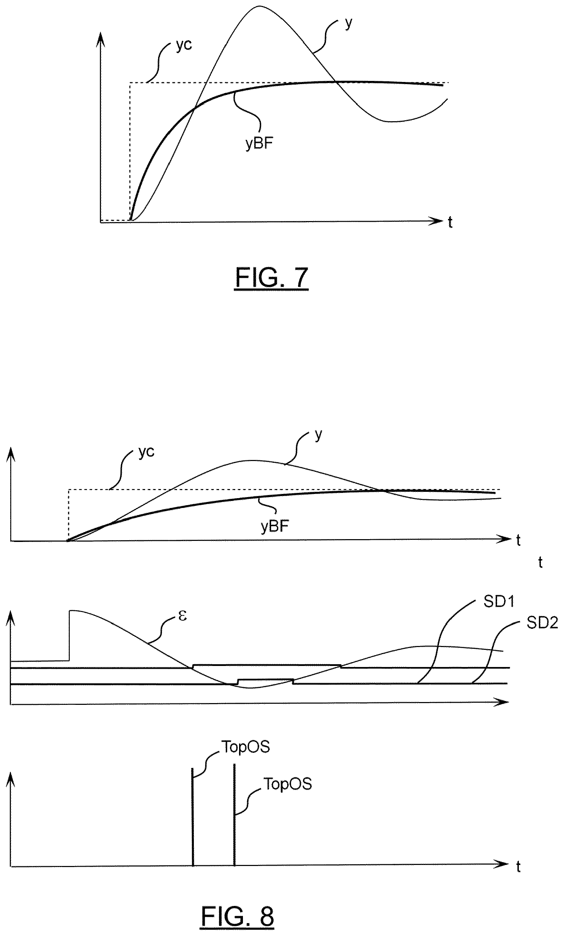

Le module de détection de dépassement supérieur 22 comporte en outre un module de détection de transitoire 222, c'est-à-dire, une variation de l'écart ε par rapport à la réponse en boucle fermée yBF, en particulier, de sa dérivée. On détermine ainsi si la régulation est bien dans une phase de transitoire croissante, c'est-à-dire, une variation croissante de la consigne de commande yc. Si l'écart ε dévie de la réponse en boucle fermée yBF, une accélération est détectée TopAccel. Un exemple de transitoire avec une instabilité en sortie de transitoire est illustré de manière schématique à la figure 7 (défaut d'amortissement).

Toujours en référence à la figure 6, le module de détection de dépassement supérieur 22 comporte en outre un module de mémorisation 223 configuré pour débuter une période de surveillance lorsqu'une accélération TopAccel est détectée. Ainsi, le module de détection de dépassement supérieur 22 est concentré sur une détection d'une instabilité lors d'une phase transitoire d'accélération. En effet, le module de détection de dépassement supérieur 22 ne vise pas à détecter un dépassement du paramètre physique y lorsque le paramètre de consigne yc est stationnaire, ce qui correspond à une instabilité de la régulation.

Le module de détection de dépassement supérieur 22 comporte en outre un module de surveillance 224 de l'écart ε par rapport à des seuils de dépassement SD1, SD2. Dans cette forme de réalisation, le module de surveillance 222 comporte deux seuils de dépassement supérieur SD1, SD2, qui sont, dans cet exemple, des seuils du type à hystérésis.

Comme illustré à la figure 6, si un dépassement d'un seuil de dépassement supérieur SD1, SD2 est détecté au cours de la période de surveillance, une valeur de correction de dépassement supérieur TopOS est émise par le module de détection de dépassement supérieur 22.

De manière avantageuse, le module de détection de dépassement supérieur 22 comporte des modules pour stopper la période de surveillance du module de mémorisation 224 en cas de détection d'une stabilisation (module 225) ou en cas de consigne de décélération (module 226). En effet, il faut éviter qu'un dépassement supérieur soit détecté par une décélération du paramètre physique de consigne yc. Cela permet d'éviter de réaliser des corrections intempestives qui sont source d'instabilité.

Un exemple de mise en oeuvre d'une détection de dépassement supérieur est illustrée à la figure 8. Dans cet exemple, suite à une phase transitoire d'accélération, l'écart ε dépasse le premier seuil de dépassement SD1, ce qui active une correction de dépassement supérieur TopOS, puis le deuxième seuil de dépassement SD2, ce qui active de nouveau une correction de dépassement supérieur TopOS. Autrement dit, la correction est réactive et permet de corriger la régulation dès l'apparition d'un dépassement en fin de transitoire. Une telle correction est possible car elle n'est réalisée qu'en présence de transitoire.

### Module de détection de dépassement inférieur 23

Le module de détection de dépassement inférieur 23 est représenté de manière schématique à la figure 3. Celui-ci ne sera pas présenté en détails par la suite étant donné qu'il est analogue au module de détection de dépassement supérieur 22 mais vise à détecter un dépassement « vers le bas » lors d'une variation décroissante d'un paramètre de consigne yc, c'est-à-dire, une décélération du paramètre physique de consigne yc.

De manière analogue au module de détection de dépassement supérieur 22, si une phase transitoire est détectée et si un dépassement d'un seuil inférieur est détecté, une valeur de correction de dépassement inférieur TopUS est émise par le module de détection de dépassement inférieur 23.

### Module de calcul 24

Le module de calcul 24 est représenté de manière schématique à la figure 3 et a pour fonction de déterminer la première composante de correction K1 à partir des valeurs de correction TopCS, TopOS et TopUS.

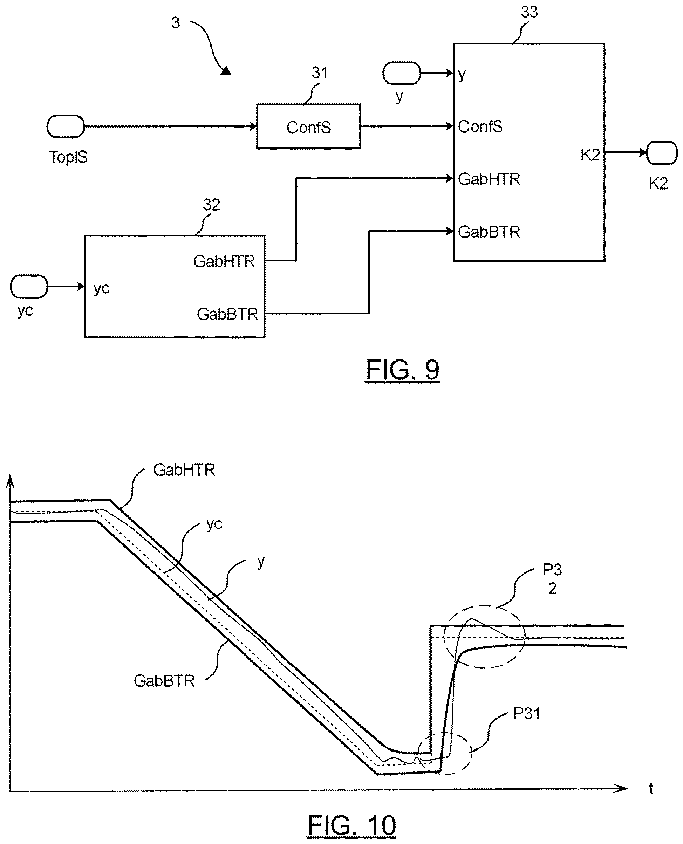

### Module de correction de temps de réponse 3 (Figure 9)

Le module de correction de temps de réponse 3 est représenté de manière schématique à la figure 9. Il comprend un module de détection de stabilité 31 configuré pour détecter que le paramètre de consigne yc est bien stable. En pratique, le module de détection de stabilité 31 vérifie que le paramètre de consigne yc varie faiblement, c'est-à-dire, sans transitoire. Le module de détection de stabilité 31 produit un signal ConfS de confirmation de stabilité à destination d'un module de calcul 33.

Toujours en référence à la figure 9, le module de correction de temps de réponse 3 comporte un module de détermination d'une plage de tolérance 32 autour du paramètre physique de consigne yc. Dans cet exemple, on détermine préalablement un gabarit bas GabBTR et un gabarit haut GabHTR et on en déduit une plage de tolérance définie entre yc-GabBTR et yc+GabHTR. La plage de tolérance correspond au trainage qui est considéré comme admissible entre le paramètre physique y et le paramètre physique de consigne yc. De manière préféré, les gabarits GabBTR, GabHTR sont déterminés à partir de la réponse du système réel F(p) en boucle fermée yBF suite à la réception d'un paramètre physique de consigne yc. Ainsi, les gabarits GabBTR, GabHTR sont déterminés de manière idéale pour définir une plage de tolérance de référence.

Le module de correction de temps de réponse 3 comporte en outre un module de calcul 33 configuré pour déterminer une deuxième constante de gain K2 si le paramètre physique y n'appartient pas à la plage de tolérance lors d'une phase stationnaire confirmée par le signal de confirmation ConfS.

En pratique, le module de correction du temps de réponse 3 permet de surveiller tout retard du paramètre physique y par rapport au paramètre physique de consigne yc. Un tel retard peut par exemple être lié à un gain de paramétrage K qui a été augmenté de manière trop importante, en particulier, suite à une détection d'une instabilité. Une deuxième constante de gain K2 de valeur négative permet d'améliorer le temps de réponse. De manière avantageuse, plusieurs corrections ponctuelles sont ainsi réalisées.

Comme illustré à la figure 10, le paramètre physique y s'écarte de la plage de surveillance dans les zones P31 et P32, ce qui traduit un retard dans la régulation. Le module de correction de temps de réponse 3 détermine la deuxième constante de gain K2 en fonction du nombre de déviation en dehors de la plage de surveillance.

### Module de détermination 4 du gain de paramétrage K (Figure 2)

Comme illustré à la figure 2, le module de détermination 4 du gain de paramétrage K est configuré pour sommer la première constante de gain K1, déterminée par le module de correction de stabilité 2, et la deuxième constante de gain K2, déterminée par le module de correction de temps de réponse 3. De manière préférée, une constante de gain statique est également ajoutée pour déterminer le gain de paramétrage K. Dans les faits, le gain de paramétrage K est modifié en temps réel.

Etant donné que la première constante de gain K1 est positive et que la deuxième constante de gain K2 est négative, le gain de paramétrage K est modifié de manière dynamique au cours de la régulation afin de s'adapter aux évolutions et corriger toute dérive.

### Exemple de mise en oeuvre de la méthode de régulation avec optimisation dynamique du gain de réglage K

Selon la méthode de régulation selon l'invention, la méthode comporte une étape de surveillance de la stabilité au cours de la régulation du paramètre physique, une étape de détermination d'une première constante de gain K1, de valeur positive, lors d'une détection d'une instabilité lors de la régulation du paramètre physique y, une étape de surveillance du temps de réponse au cours de la régulation du paramètre physique en cas d'absence d'instabilité, une étape de détermination d'une deuxième constante de gain K2, de valeur négative, lors d'une détection d'un retard lors de la régulation du paramètre physique et une étape de détermination du gain de paramétrage K du correcteur C(p) à partir de la première constante de gain K1 et de la deuxième constante de gain K2 de manière à garantir la stabilité de la régulation tout en optimisant le temps de réponse.

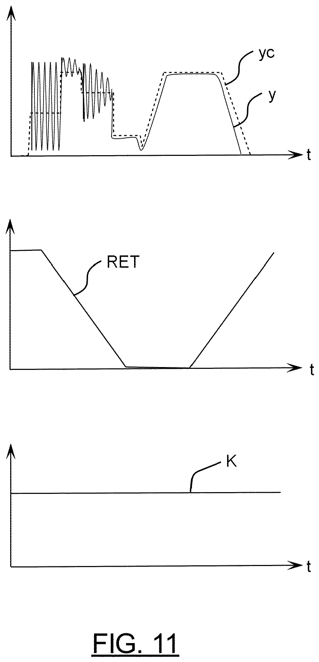

A titre d'exemple, afin de présenter les avantages de l'invention au regard de l'art antérieur, il est représenté à la figure 11 l'évolution du paramètre physique y en fonction du paramètre physique de consigne yc (courbes supérieures) lorsque le système réel F(p) subit un retard périodique RET (courbe médiane) pour un gain de paramétrage statique (courbe inférieure). Dans cet exemple, le retard RET varie entre 0,2s et 3s.

Comme illustré à la figure 11, lorsque le retard RET devient important, il apparait des instabilités importantes du paramètre physique y, aussi bien en fonctionnement stabilisé que lors des transitoires. De plus, la rapidité n'est pas optimale. Une telle régulation n'est pas satisfaisante.

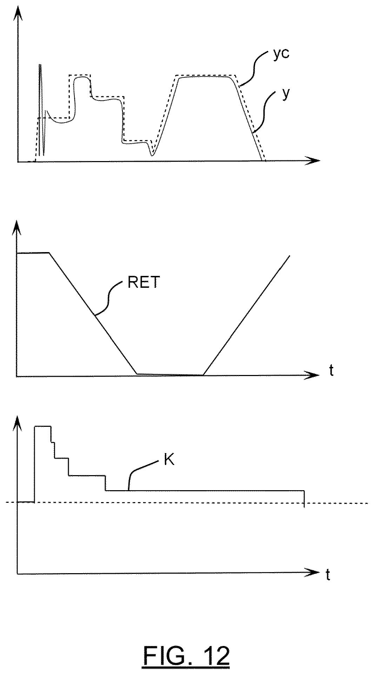

En référence à la figure 12, il est représenté l'évolution du paramètre physique y en fonction du paramètre physique de consigne yc (courbes supérieures) lorsque le système réel F(p) subit un retard périodique RET (courbe médiane) pour un gain de paramétrage dynamique (courbe inférieure) tel qu'optimisé par le système de régulation REG selon l'invention.

Comme illustré à la figure 12, lorsque le retard RET devient important, il apparait une instabilité du paramètre physique y qui est corrigée de manière réactive par une augmentation du gain de paramétrage K. Cette augmentation est liée au module de correction de stabilité 2 qui a augmenté la première constante de gain K1 suite à la détection de l'instabilité TopIS. Lorsque le retard RET devient plus faible, l'augmentation passée du gain de paramétrage K pénalise le temps de réponse et introduit un trainage. Ce trainage est corrigé de manière réactive par une baisse du gain de paramétrage K. Cette baisse est liée au module de correction du temps de réponse 3 qui a diminué la deuxième constante de gain K2 suite à la détection d'un trainage.

Grâce à l'invention, la stabilité et le temps de réponse du système de régulation REG sont corrigés de manière dynamique et réactive au cours du temps. Les performances du système de régulation REG sont optimales du fait de son auto-adaptation.

## Revendications

1. Système de régulation (REG) d'un paramètre physique (y) d'un système réel F(p) d'une turbomachine à partir d'un paramètre physique de consigne (yc), le système de régulation (REG) présentant un temps de réponse et comportant :
- un correcteur comportant une fonction de correction C1(p) et un gain de paramétrage K,
- une fonction de transfert inverse théorique F⁻¹(p) du système réel F(p), et
- un système d'optimisation (OPTK) du gain de paramétrage K au cours de la régulation, le système d'optimisation (OPTK) étant **caractérisé par**:
i. un module de correction de stabilité (2) configuré pour déterminer une première constante de gain K1, de valeur positive, lors d'une détection d'une instabilité du système de régulation (REG) lors de la régulation du paramètre physique (y),
ii. un module de correction (3) du temps de réponse du système de régulation (REG) configuré pour déterminer une deuxième constante de gain K2, de valeur négative, lors d'une détection d'un retard lors de la régulation du paramètre physique (y), le module de correction de stabilité (2) étant configuré pour inhiber le module de correction du temps de réponse (3) lors d'une détection d'une instabilité (TopIS) lors de la régulation du paramètre physique (y), et
iii. un module de détermination (4) configuré pour déterminer le gain de paramétrage K en fonction de la première composante de gain K1 et de la deuxième composante de gain K2 déterminées préalablement.

2. Système de régulation (REG) selon la revendication 1, dans lequel, un écart (ε) étant défini entre le paramètre physique (y) et le paramètre physique de consigne (yc), le module de correction de stabilité (2) comportant un module de détection de stabilité (21) configuré pour comparer l'écart (ε) à un seuil d'écart haut (SH) et à un seuil d'écart bas (SB), le module de détection de stabilité (21) est configuré pour détecter une instabilité (TopIS) si l'écart (ε) est successivement supérieur au seuil d'écart haut (SH) puis inférieur au seuil d'écart bas (SB).

3. Système de régulation (REG) selon la revendication 2, dans lequel, l'écart (ε) oscillant au cours d'une instabilité (TopIS), le module de détection de stabilité (21) est configuré pour compter les oscillations suite à une détection d'une instabilité (TopIS) et pour déterminer un paramètre de correction de stabilité (TopCS) en fonction du nombre d'oscillations comptées (NB-osc), la première composante de gain K1 dépendant du paramètre de correction de stabilité (TopCS).

4. Système de régulation REG selon la revendication 3, dans lequel, le module de correction de stabilité (2) est configuré pour mettre à zéro le nombre d'oscillations comptées (NB-osc) en cas de détection d'une phase de transitoire générée par une variation significative du paramètre physique de consigne (yc).

5. Système de régulation (REG) selon l'une des revendications 1 à 4, dans lequel le module de correction de stabilité (2) comporte un module de détection de dépassement supérieur (22) configuré pour déterminer un paramètre de dépassement supérieur (TopOS), la première composante de gain K1 dépendant du paramètre de dépassement supérieur (TopOS).

6. Système de régulation (REG) selon la revendication 5, dans lequel, un écart (ε) étant défini entre le paramètre physique (y) et le paramètre physique de consigne (yc), le module de détection de dépassement supérieur (22) est configuré pour débuter une période de surveillance de l'écart (ε) suite à une variation significative croissante du paramètre de consigne (yc), le module de détection de dépassement supérieur (22) étant configuré pour comparer l'écart (ε) à au moins un seuil de dépassement supérieur (SD1, SD2) au cours de la période de surveillance, le module de détection de dépassement supérieur (22) étant configuré pour détecter un dépassement supérieur (TopOS) si l'écart (ε) est supérieur au seuil de dépassement supérieur (SD1, SD2).

7. Système de régulation (REG) selon l'une des revendications 1 à 6, dans lequel le module de correction du temps de réponse (3) est configuré pour déterminer une plage de tolérance autour du paramètre physique de consigne (yc) et pour déterminer une deuxième constante de gain K2 si le paramètre physique (y) n'appartient pas à la plage de tolérance.

8. Méthode de régulation d'un paramètre physique (y) par mise en oeuvre d'un système de régulation (REG) selon l'une des revendications 1 à 7, la méthode de régulation comportant :
- une étape de surveillance de la stabilité au cours de la régulation du paramètre physique (y)
- une étape de détermination d'une première constante de gain K1, de valeur positive, lors d'une détection d'une instabilité (TopIS) lors de la régulation du paramètre physique (y),
- une étape de surveillance du temps de réponse du système de régulation REG au cours de la régulation du paramètre physique (y) en cas d'absence d'instabilité (TopIS),
- une étape de détermination d'une deuxième constante de gain K2, de valeur négative, lors d'une détection d'un retard lors de la régulation du paramètre physique (y),
- une étape de détermination du gain de paramétrage K du correcteur C(p) à partir de la première constante de gain K1 et de la deuxième constante de gain K2 de manière à garantir la stabilité de la régulation tout en optimisant le temps de réponse.

9. Programme d'ordinateur comprenant des instructions pour l'exécution des étapes de la méthode de régulation selon la revendication 8 lorsque ledit programme est exécuté par un ordinateur.

10. Unité électronique de commande pour turbomachine comprenant une mémoire incluant des instructions d'un programme d'ordinateur selon la revendication 9.

11. Turbomachine comprenant une unité électronique selon la revendication 10.

## Patentansprüche

1. System zur Regelung (REG) eines physikalischen Parameters (y) eines realen Systems F(p) einer Turbomaschine ausgehend von einem physikalischen Sollparameter (yc), wobei das Regelungssystem (REG) eine Antwortzeit aufweist und umfasst:
- einen Korrektor, der eine Korrekturfunktion C1(p) und eine Parametrierungsverstärkung K aufweist,
- eine theoretische inverse Transferfunktion F⁻¹(p) des realen Systems F(p), und
- ein Optimierungssystem (OPTK) der Parametrierungsverstärkung K während der Regelung, wobei das Optimierungssystem (OPTK) **gekennzeichnet ist durch**:
i. ein Stabilitätskorrekturmodul (2), das dazu ausgelegt ist, eine erste Verstärkungskonstante K1 mit positivem Wert bei einer Ermittlung einer Instabilität des Regelungssystems (REG) bei der Regelung des physikalischen Parameters (y) zu bestimmen,
ii. ein Korrekturmodul (3) der Antwortzeit des Regelungssystems (REG), das dazu ausgelegt ist, eine zweite Verstärkungskonstante K2 mit negativem Wert bei einer Ermittlung einer Verzögerung bei der Regelung des physikalischen Parameters (y) zu bestimmen, wobei das Stabilitätskorrekturmodul (2) dazu ausgelegt ist, das Korrekturmodul der Antwortzeit (3) bei einer Ermittlung einer Instabilität (TopIS) bei der Regelung des physikalischen Parameters (y) zu hemmen, und
iii. ein Bestimmungsmodul (4), das dazu ausgelegt ist, die Parametrierungsverstärkung K in Abhängigkeit von der ersten Verstärkungskomponente K1 und der zweiten Verstärkungskomponente K2 zu bestimmen, die zuvor bestimmt wurden.

2. Regelungssystem (REG) nach Anspruch 1, wobei, wenn eine Abweichung (ε) zwischen dem physikalischen Parameter (y) und dem physikalischen Sollparameter (yc) definiert ist, wobei das Stabilitätskorrekturmodul (2) ein Stabilitätsdetektionsmodul (21) aufweist, das dazu ausgelegt ist, die Abweichung (ε) zu einem oberen Abweichungsgrenzwert (SH) und zu einem unteren Abweichungsgrenzwert (SB) zu vergleichen, das Stabilitätsdetektionsmodul (21) dazu ausgelegt ist, eine Instabilität (TopIS) zu ermitteln, wenn die Abweichung (ε) nacheinander höher als der obere Abweichungsgrenzwert (SH), dann niedriger als der untere Abweichungsgrenzwert (SB) ist.

3. Regelungssystem (REG) nach Anspruch 2, wobei, wenn die Abweichung (ε) während einer Instabilität (TopIS) schwankt, das Stabilitätsdetektionsmodul (21) dazu ausgelegt ist, die Schwankungen infolge einer Ermittlung einer Instabilität (TopIS) zu zählen und einen Stabilitätskorrekturparameter (TopCS) in Abhängigkeit von der Anzahl der gezählten Schwankungen (NB-osc) zu bestimmen, wobei die erste Verstärkungskomponente K1 vom Stabilitätskorrekturparameter (TopCS) abhängt.

4. Regelungssystem REG nach Anspruch 3, wobei das Stabilitätskorrekturmodul (2) dazu ausgelegt ist, die Anzahl der gezählten Oszillationen (NB-osc) bei Ermittlung einer von einer signifikanten Variation des physikalischen Sollparameters (yc) erzeugten Übergangsphase auf null zu stellen.

5. Regelungssystem (REG) nach einem der Ansprüche 1 bis 4, wobei das Stabilitätskorrekturmodul (2) ein Modul zur Ermittlung einer oberen Überschreitung (22) aufweist, das dazu ausgelegt ist, einen Parameter der oberen Überschreitung (TopOS) zu bestimmen, wobei die erste Verstärkungskomponente K1 vom Parameter der oberen Überschreitung (TopOS) abhängt.

6. Regelungssystem (REG) nach Anspruch 5, wobei, wenn eine Abweichung (ε) zwischen dem physikalischen Parameter (y) und dem physikalischen Sollparameter (yc) definiert ist, das Modul zur Ermittlung einer oberen Überschreitung (22) dazu ausgelegt ist, einen Überwachungszeitraum der Abweichung (ε) infolge einer zunehmenden signifikanten Variation des Sollparameters (yc) zu beginnen, wobei das Modul zur Ermittlung einer oberen Überschreitung (22) dazu ausgelegt ist, die Abweichung (ε) mit mindestens einem Grenzwert einer oberen Überschreitung (SD1, SD2) während des Überwachungszeitraums zu vergleichen, wobei das Modul zur Ermittlung einer oberen Überschreitung (22) dazu ausgelegt ist, eine obere Überschreitung (TopOS) zu ermitteln, wenn die Abweichung (ε) über dem Grenzwert einer oberen Überschreitung (SD1, SD2) liegt.

7. Regelungssystem (REG) nach einem der Ansprüche 1 bis 6, wobei das Korrekturmodul der Antwortzeit (3) dazu ausgelegt ist, einen Toleranzbereich um den physikalischen Sollparameter (yc) zu bestimmen und eine zweite Verstärkungskonstante K2 zu bestimmen, wenn der physikalische Parameter (y) nicht im Toleranzbereich liegt.

8. Verfahren zur Regelung eines physikalischen Parameters (y) durch die Umsetzung eines Regelungssystems (REG) nach einem der Ansprüche 1 bis 7, wobei das Regelungsverfahren aufweist:
- einen Schritt der Überwachung der Stabilität während der Regelung des physikalischen Parameters (y),
- einen Schritt der Bestimmung einer ersten Verstärkungskonstante K1 mit positivem Wert bei einer Ermittlung einer Instabilität (TopIS) bei der Regelung des physikalischen Parameters (y),
- einen Schritt der Überwachung der Antwortzeit des Regelungssystems REG während der Regelung des physikalischen Parameters (y) bei Abwesenheit einer Instabilität (TopIS),
- einen Schritt der Bestimmung einer zweiten Verstärkungskonstante K2 mit negativem Wert bei einer Ermittlung einer Verzögerung bei der Regelung des physikalischen Parameters (y),
- einen Schritt der Bestimmung der Parametrierungsverstärkung K des Korrektors C(p) ausgehend von der ersten Verstärkungskonstante K1 und von der zweiten Verstärkungskonstante K2 derart, dass die Stabilität der Regelung bei Optimierung der Antwortzeit garantiert wird.

9. Rechnerprogramm, das Befehle für die Ausführung der Schritte des Regelungsverfahrens nach Anspruch 8 umfasst, wenn das Programm von einem Rechner ausgeführt wird.

10. Elektronische Steuereinheit für eine Turbomaschine, die einen Speicher umfasst, der Befehle eines Rechnerprogramms nach Anspruch 9 einschließt.

11. Turbomaschine, die eine elektronische Einheit nach Anspruch 10 umfasst.

## Claims

1. A regulation system (REG) for regulating a physical parameter (y) of a real system F(p) of a turbomachine from a physical parameter set point (yc), the regulation system (REG) having a response time and comprising:
- a corrector comprising a correction function C1(p) and a parameterization gain K,
- a theoretical inverse transfer function F⁻¹(p) of the real system F(p), and
- a system for optimizing (OPTK) the parameterization gain K during regulation, the optimization system (OPTK) being **characterized by** :
i. a stability correction module (2) configured to determine a first gain constant K1, with a positive value, upon detecting an instability of the regulation system (REG) upon regulating the physical parameter (y),
ii. a module (3) for correcting the response time of the regulation system (REG), configured to determine a second gain constant K2, with a negative value, upon detecting a delay upon regulating the physical parameter (y), the stability correction module (2) being configured to inhibit the response time correction module (3) upon detecting an instability (TopIS) upon regulating the physical parameter (y), and
iii. a determination module (4) configured to determine the parameterization gain K as a function of the first gain component K1 and second gain component K2 previously determined.

2. The regulation system (REG) according to claim 1, wherein, with a deviation (ε) being defined between the physical parameter (y) and the physical parameter set point (yc), the stability correction module (2) comprising a stability detection module (21) configured to compare the deviation (ε) with a high deviation threshold (SH) and a low deviation threshold (SB), the stability detection module (21) is configured to detect an instability (TopIS) if the deviation (ε) is successively higher than the high deviation threshold (SH) and then lower than the low deviation threshold (SB).

3. The regulation system (REG) according to claim 2, wherein, with the deviation (ε) oscillating during an instability (TopIS), the stability detection module (21) is configured to count oscillations following detection of an instability (TopIS) and to determine a stability correction parameter (TopCS) as a function of the number of oscillations counted (NB-osc), the first gain component K1 depending on the stability correction parameter (TopCS).

4. The regulation system REG according to claim 3, wherein, the stability correction module (2) is configured to reset the number of oscillations counted (NB-osc) to zero in case of detection of a transient phase generated by a significant variation in the physical parameter set point (yc).

5. The regulation system (REG) according to one of claims 1 to 4, wherein the stability correction module (2) comprises an overshoot detection module (22) configured to determine an overshoot parameter (TopOS), the first gain component K1 depending on the overshoot parameter (TopOS).

6. The regulation system (REG) according to claim 5, wherein, with a deviation (ε) being defined between the physical parameter (y) and the physical parameter set point (yc), the overshoot detection module (22) is configured to start a monitoring period of the deviation (ε) following a significant increasing variation in the parameter set point (yc), the overshoot detection module (22) being configured to compare the deviation (ε) to at least one overshoot threshold (SD1, SD2) during the monitoring period, the overshoot detection module (22) being configured to detect an overshoot (TopOS) if the deviation (ε) is greater than the overshoot threshold (SD1, SD2).

7. The regulation system (REG) according to any of claims 1 to 6, wherein the response time correction module (3) is configured to determine a tolerance range around the physical parameter set point (yc) and to determine a second gain constant K2 if the physical parameter (y) does not fall within the tolerance range.

8. A method for regulating a physical parameter (y) by implementing a regulation system (REG) according to any of claims 1 to 7, the regulation method comprising:
- a step of monitoring the stability upon regulating the physical parameter (y),
- a step of determining a first gain constant K1, with a positive value, upon detecting an instability (TopIS) upon regulating the physical parameter (y),
- a step of monitoring the response time of the regulation system REG upon regulating the physical parameter (y) in the absence of instability (TopIS),
- a step of determining a second gain constant K2, with a negative value, upon detecting a delay upon regulating the physical parameter (y),
- a step of determining the parameterization gain K of the corrector C(p) from the first gain constant K1 and the second gain constant K2 so as to ensure stability of the regulation while optimizing the response time.

9. A computer program comprising instructions for executing the steps of the regulation method according to claim 8 when said program is executed by a computer.

10. An electronic control unit for a turbomachine comprising a memory comprising instructions of a computer program according to claim 9.

11. A turbomachine comprising an electronic unit according to claim 10.
